# EUROPEAN PATENT APPLICATION

(11) **EP 2 144 477 A2**
(43) Date of publication of application: **13.01.2010**
(21) Application number: 09382107.2
(22) Date of filing: 08.07.2009
(51) Int. Cl.: H04W 76/04, H04W 16/00, H04W 28/26, H04W 92/04

(54) **Method and system for pooled 2g-3g single transmission**

(30) Priority: 09.07.2008 ES 200802048
(71) Applicant: Vodafone Group PLC, Newbury Berkshire RG14 2FN (GB); Vodafone España, S.A.U., 28108 Alcobendas, Madrid (ES)
(72) Inventor: Dominguez Romero, Francisco, Javier, 28050, MADRID (ES); Urbano Ruiz, Julio, 28050, MADRID (ES); Lopez Sanchez-Vizcaino, Antonio, 28050, MADRID (ES)
(74) Representative: Carpintero Lopez, Francisco

(57) **Abstract**

Method for transmitting packets in a mobile communications network, the mobile telecommunications network having an access network, comprising the following steps:
- identifying at least a first node (4,5) and at least a second node (6,7) of the access network, said at least first node being capable of connecting to the said at least second node and vice versa;
- transmitting at least one packet from the first node to the second node and/or vice versa;
wherein:
- the step of transmitting packets uses a common physical transmission interface (10) with bandwidth dynamically allocated to either a first Radio Access Technology or a second Radio Access Technology according to their quality of service parameters, by a single common Call Admission Control (20) and a single common Congestion Control algorithm (30) for GSM and UMTS; and
- both packets of a first and second Radio Access Technologies are encapsulated using a common data link layer and a common network layer over a single common physical layer (106).
It also relates to a system for transmitting packets in a mobile telecommunications network.

## Description

### Field of the invention

The present invention lies within the telecommunications field and, especially, in wireless communications networks including the second generation (2G) and the third generation (3G) networks (i.e., supporting GSM and WCDMA technologies respectively).

### Background of the invention

It is well-known that abbreviations and acronyms are frequently used in the mobile telephony field. Below is a glossary of acronyms and terms used throughout the present specification:
- 2G: Second Generation of Mobile Service, also known as GSM.
- 3G: Third Generation of Mobile Service, also known as UMTS.
- AAL: ATM Adaptation Layer.
- ATM: Asynchronous Transfer Mode.
- ARP: Allocation Retention Priority.
- BSC: Base Station Controller.
- BTS or Node B: Base Transceiver Station in 2G or 3G, respectively.
- CAC: Call Admission Control.
- DTAP: Direct Transfer Application Part
- DSCP: Differentiated Services Code Point.
- GMM: GPRS Mobility Management
- HLR: Home Location Register.
- IMA: Inverse Multiplexing over ATM.
- IP: Internet Protocol.
- LAPD: Link Access Protocol-D Channel.
- LLC: Logical Link Control.
- MAC: Medium Access Control.
- PCU: Packet Control Unit.
- RNC: Radio Network Controller.
- RRLP: Radio Resource LCS (Location Services) Protocol.
- SDU: Service Data Unit.
- SM: Session Management.
- SNDCP: Sub-Network Dependent Convergence Protocol.
- TDM: Time-Division Multiplexing.
- THP: Traffic Handling Priority.
- TRAU: Transcoder and Rate Adaption Unit.
- UDP, RTP, SCTP: transport protocols.

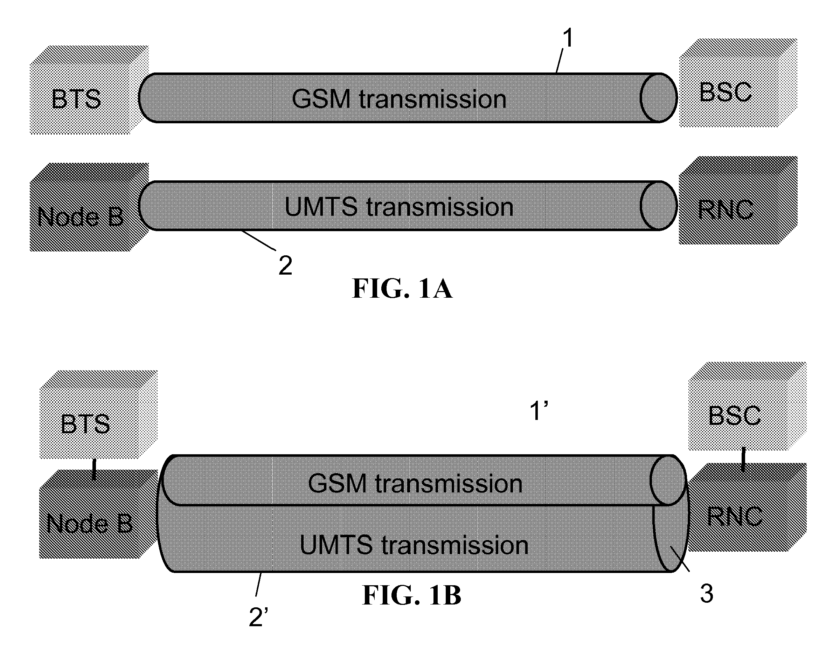

GSM mobile operators have also deployed UMTS in their networks. A big part of the GSM and UMTS sites are currently being grouped together (as shown in figure 1 A). The problem is that a distinct transmission system is needed for each technology, so each part -GSM transmission 1 and UTMS transmission 2- has to be dimensioned independently, i.e. the size of the GSM partition has to be calculated based on the GSM cell traffic, and the UMTS partition has to be based on the UMTS traffic, as they are different links.

Current existing solutions allow the use of a shared physical resource 3 between 2G and 3G, i.e. it is possible to carry GSM traffic over the transmission system used for UMTS. However, in the logical plane, two transmission systems still have to be defined (2G and 3G), so a respective specific bandwidth has to be reserved for each technology (as shown in figure 1 B). As a result, the trunking efficiency is impaired and the same problem arises as before, i.e. each part -GSM transmission 1' and UTMS transmission 2'- has to be dimensioned independently.

Patent application CN-1867121-A discloses a method and a system for avoiding interruption in the 2G service when transmitting 3G and 2G synchronously. For this purpose, when transmitting 3G and 2G synchronously, a logic circuit is provided in the controller of the 3G base station; when said controller cannot process the time slot cross function on the 2G service, it connects the transmission lines of the station controllers of 2G and 3G base stations via said logic circuit, and this is then used to transmit the 2G service. Therefore, it only allows to use a shared physical resource between 2G and 3G; in the logical plane two transmission systems (2G and 3G) are still defined, allocating different bandwidths to each, which means that no trunking efficiency is achieved.

### Summary of the invention

The invention refers to a method and a system for transmitting packets in a mobile telecommunications network according to claims 1 and 7, respectively. Preferred embodiments of the method and system are defined in the dependent claims.

The drawbacks described in the previous section can be largely mitigated according to the present invention, by means of a unique transmission system configured to carry both 2G and 3G traffic under a common pool bandwidth, which is dynamically allocated regardless the radio access technology -2G or 3G- and according to the type of service by means of a unique Call Admission Control algorithm and a unique Congestion Control algorithm, common for both 2G and 3G packets.

Thus, in order to achieve this unique transmission, it is necessary to have the same equipment implementing such shared Call Admission Control and shared Congestion Control algorithms in both sides of the link, that is, it is necessary to have at least a common interface board in the RNC/BSC and the Node B/BTS, with direct complete control of the allocated resources in both systems.

The invention refers to a method for transmitting packets in a mobile telecommunications network, the mobile telecommunications network having an access network, comprising the following steps:
- identifying at least a first node -such as a Base Transceiver Station or a Node B-, and at least a second node -such as a Base Station Controller or a Radio Network Controller- of the access network, said at least first node being capable of connecting to the said at least second node and vice versa;
- transmitting at least one packet from the first node to the second node and/or vice versa.

According to a first aspect of the invention:
- the step of transmitting packets uses a common physical transmission interface with bandwidth dynamically allocated to either a first Radio Access Technology (RAT), such as GSM, or a second first Radio Access Technology (RAT), such as UMTS, according to one or more of their quality of service parameters, by a single common Call Admission Control and a single common Congestion Control algorithms for both Radio Access Technologies, preferably -GSM and UMTS; and
- both packets of a first and second RAT, which preferably are GSM and UMTS packets, are encapsulated using a common data link layer and a common network layer over a single common physical layer.

Thus, the allocation of resources, i.e. priority and bandwidth allocated for every user, is done according to their quality of service parameters, along with the type of service but not to the Radio Access Technology.

Preferably, said first Radio Access Technology is GSM and said second Radio Access Technology is UMTS, and GSM and UMTS packets are handled.

Quality of service parameters refers to the 3GPP standards parameters as defined in TS 23.107, which are listed below:
- Traffic class
- Maximum bit rate
- Guaranteed bit rate
- Delivery order
- Maximum SDU size
- SDU format information
- SDU error ratio
- Residual bit error ratio
- Delivery of erroneous SDUs
- Transfer delay
- Guaranteed bit rate
- Traffic handling priority
- Allocation/Retention priority
- Source statistics descriptor
- Signalling indication

The step of transmitting said at least one packet can use ATM as a common protocol for both packets of said first and second Radio Access Technologies, or can use IP as common protocol for both packets of said first and second Radio Access Technologies.

Preferably the GSM signalling part is transported over ATM Adaptation Layer AAL2, so as to give a certain quality of service.

The User Plane Data for Circuit Switch is preferably transported over ATM Adaptation Layer AAL2, which can carry time-dependent Variable Bit Rate (VBR-RT) connection-oriented and synchronous traffic.

GPRS protocols, user and control plane are preferably mapped over ATM Adaption Layer AAL5, which is the preferred one to transport VBR and data traffic with simplified header.

The method of the invention is preferably implemented by means of a computer program, comprising computer program code means adapted to perform the method defined herein before, when said program is run on a computer. The computer program is preferably embodied on a computer readable medium.

The invention also refers to a system for transmitting packets in a mobile telecommunications network, the mobile telecommunications network having an access network, the system comprising at least a first node -such as a Base Transceiver Station or a Node B-, and at least a second node -such as a Base Station Controller or a Radio Network Controller- which are capable of connecting to each other and of exchanging at least one packet.

According to a second aspect of the invention both said first node and said second node each comprise:
- a single interface board with single common Call Admission Control means and single common Congestion Control means for dynamically allocating packets of a first and of a second Radio Access Technologies (RAT) according to their quality of service parameters; and
- encapsulating means for encapsulating both packets of said first and second Radio Access Technologies using a common data link layer and a common network layer over a single common physical layer;
   and the system comprises a common physical transmission interface whose bandwidth is dynamically allocated to either said first RAT, preferably GSM, or said second RAT, preferably UMTS, according to such one or more quality of service parameters by a single common Call Admission Control and a single common Congestion Control algorithm.

Preferably, said first Radio Access Technology is GSM and said second Radio Access Technology is UMTS, and the system handles GSM and UMTS packets.

Due to the trunking efficiency allowed by the method and system of the present invention:
- with the same bandwidth, higher peak rates are achieved for the bursty data services that can exploit the instantaneous remaining free bandwidth;
- less transmission resources are needed for the same quality of service targets (e.g. blocking rate, average throughput...) if compared with current implementations.

The dimensioning of the unique transmission system is easier and has to be done solely once for the common 2G and 3G traffic. On the contrary, with the current solutions, two independent capacity analysis have to be done -for 2G and 3G-, leading to a higher probability of dimensioning error and more effort.

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but rather as examples of how the invention can be embodied. The drawings comprise the following figures:
Figure 1A and Figure 1B show a conventional way of sharing 2G and 3G access transmission.
Figure 2 schematically shows the pooled 2G-3G single transmission of the present invention with common CAC and CC parts in the equipments controlling the fully sharing of the transmission.
Figure 3 shows the common stack protocol when ATM is used.
Figure 4 shows a more detailed implementation of the common stack protocol of Figure 3.
Figure 5 shows the common stack protocol when IP is used.
Figure 6 graphically shows the difference between current implementations of 2G-3G, each with its allocated bandwidth, and the current pooled 2G-3G single transmission.

### Detailed description of the preferred embodiments

Reference will now be made in detail to a preferred embodiment of the present invention.

As explained before, figures 1A and 1B show how 2G-3G transmission is achieved in the existing solutions.

In both cases, as explained in the *Background of the Invention*, a specific bandwidth has to be allocated independently for each technology, thereby losing the trunking efficiency.

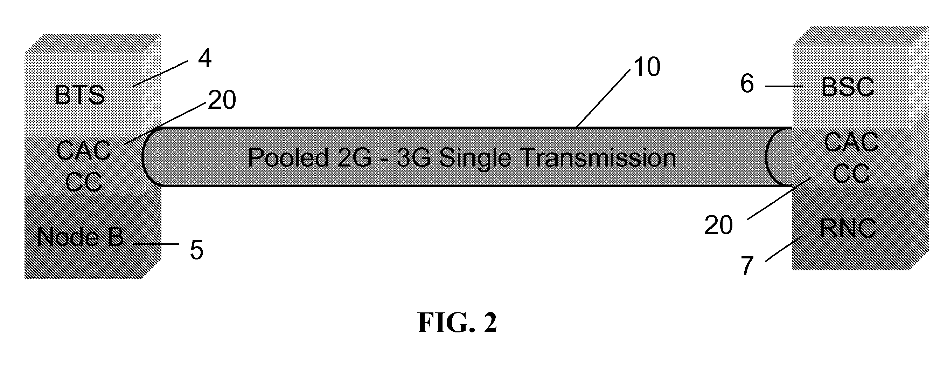

According to the present invention (as shown in figure 2), a unique transmission system is configured to carry both 2G and 3G traffic under a common pool bandwidth 10, which is dynamically allocated regardless the technology -2G or 3G- and according to the type of service.

For this purpose, the Base Transceiver Station 4 and Node B 5 on one side of the link share a single common interface board 20; and the Base Station Controller 6 and the Radio Network Controller 7, on the other end of the link also share a single common interface board 20. The common interface board includes Call Admission Control CAC and common Congestion Control CC algorithms.

The common interface board 20 manages the traffic of the two systems: 2G and 3G. When a new voice call arrives via the common interface board, then it is setup in the lub/Abis interface. The setup is done through the common CAC. A voice call is setup with 12 Kbps reserved (irrespective whether it is GSM or UMTS) with very high priority and bandwidth reserved. If there are many calls already accepted in the system, and the left bandwidth is less than 12 Kbps, the following call is rejected.

Similarly, a single common Congestion Control algorithm is used for both 2G and 3G traffic.

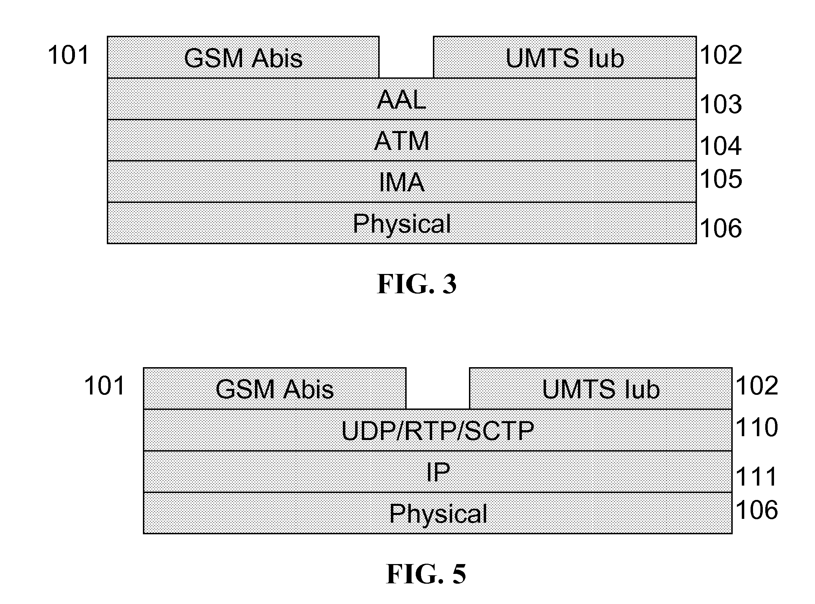

As shown in figures 3-5, the present invention implements the pooled 2G-3G single transmission with a unified protocol stack.

In the existing implementations of protocol stack GSM is carried over TDM and UMTS over ATM. The interface in GSM between the BSC (base station controller) and the BTS is the Abis interface 101. And the interface in UMTS between the RNC (radio network controller) and the Node B is the lub interface 102.

There are two possible cases in the transport of 2G Abis: TDM or IP. In 3G, there are also two possible cases: ATM and IP.

According to a first preferred embodiment of the unified protocol stack in the present invention, the implementation of the pooled 2G-3G single transmission uses ATM as a common protocol for both 2G-3G, as shown in figure 3. Thanks to the common 2G-3G physical transmission equipment with a single Call Admission Control algorithm and a single Congestion Control algorithm common for 2G and 3G, it is possible to implement a common protocol stack as shown in figure 3 with an ATM Adaptation Layer 103 over the ATM layer 104, and the corresponding IMA layer 105 and physical layer 106.

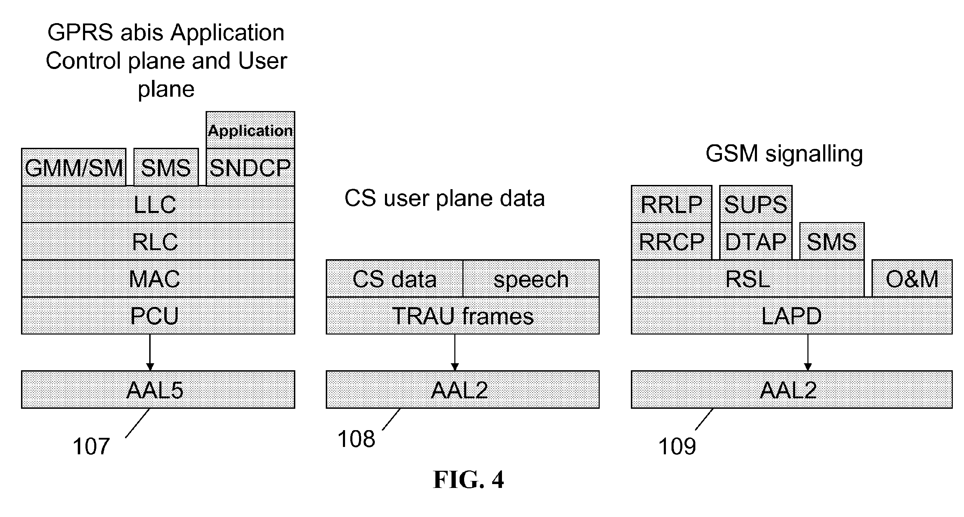

In figures 3 and 4, the common protocol stack for 2G and 3G over ATM is shown. In the case of 3G, the lub over ATM is already implemented and standardised, so no more details are disclosed here as it is already in the 3GPP standards.

The mapping of GSM Abis over AAL has not been standardised nor implemented by any vendor in the industry, so it is necessary to specify the detailed mapping of every protocol over the AAL layer 103. There is no need of a new adapting layer since the AAL is an ATM Adaptation Layer protocol, which is in charge of the segmentation and reassembly of the higher layers. So the key is to choose the proper AAL type layer to transport the different traffic/protocols of GSM over the ATM network.

In figure 4, the mapping details of the 2G protocols over ATM are shown, as they are not standard and need to be defined for this invention. The protocol mapping proposed here is an example and other possibilities can be done.

In this proposal, the GSM signalling part is transported over AAL2 109 to give certain quality of service. That means that LAPD packets are multiplexed with AAL2 protocol to be transmitted over ATM. AAL2 is chosen because it supports time-dependent Variable Bit Rate (VBR-RT) connection-oriented, synchronous traffic. The User Plane Data for Circuit Switch, too, is transported over AAL2 110 which can carry time-dependent Variable Bit Rate (VBR-RT) connection-oriented and synchronous traffic, i.e. the voice frames (TRAU frames) are transported with AAL2 packets (although other layers such as, for example, AAL1 can also guarantee a circuit for the speech traffic). AAL Type 1 supports constant bit rate (CBR), synchronous, connection oriented traffic although it is less efficient than the AAL2. On the contrary the GPRS protocols, user and control plane are mapped over AAL5 107, i.e. the PCU packets are multiplexed over AAL5 packets, which is the preferred way of transporting VBR and data traffic with simplified header. Other layers could be used instead. For example AAL2 can be used to guarantee certain bandwidth dedicated for this kind of traffic.

However the trend in the industry is the evolution to the IP world. So both interfaces are being migrated to IP.

The use of IP as a protocol in the lub/Abis interface is shown in Figure 5, which corresponds to a second preferred embodiment of the protocol stack in the present invention. Both UMTS lub 102 and GSM Abis 101 use IP protocol 111 with UDP/RTP/SCTP protocols 110 to transport the different channels. No more details are presented as both lub over IP and Abis over IP are already implemented in the industry.

With these two cases, ATM and IP, all the network transmission topologies of the existing mobile telecommunications network operators are covered.

The pooled 2G-3G single transmission, in accordance with a preferred embodiment of the invention, has the following consequences:
- Traffic is managed all together regardless the technology, 2G or 3G, thanks to the common interface board used for 2G and 3G. That means, the GSM traffic could occupy the entire physical interface in the absence of UMTS traffic in the lub. Likewise, the UMTS traffic can occupy the complete interface if no GSM traffic is present.
- Physical ports are fully shared by both 2G and 3G (E1, Ethernet, STM-1). The interfaces ports are exactly the same and are located in the same boards of the base stations (BTS/NodeB) and radio controllers (BSC/RNC).
- Call admission control is common for both radio access technologies (RATs): at the call admission, the resources are dynamically allocated regardless the technology (2G or 3G) and just according the type of service. With the common equipment it is possible to know how many calls and what kind of calls are in the system. Also the information of bandwidth reservation is known, if the Bandwidth available is lower than the new call BW requested, then the call is rejected no matter if the call is 2G or 3G.
- Congestion control is also common to both RATs. Traffic prioritisation depends on the kind of traffic (not the technology). For example, conversational traffic (voice or video-calls) have always priority over the packet interactive/background services.

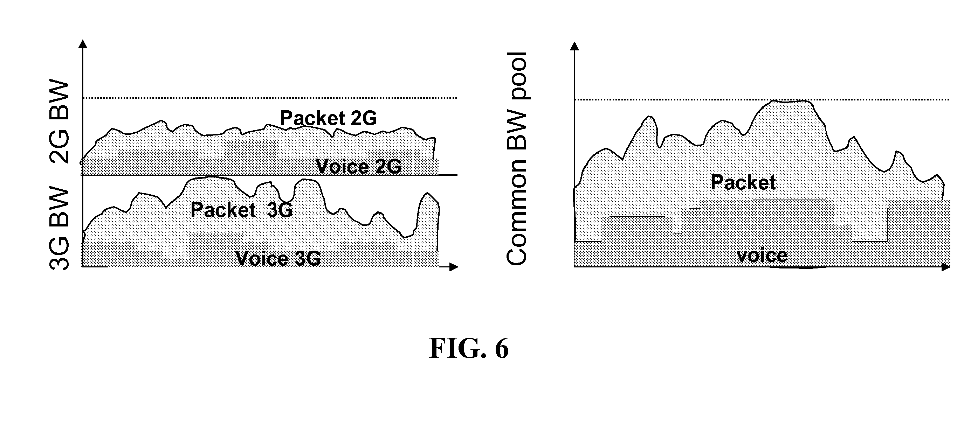

Currently in UMTS and GSM vendors implement traffic management algorithms for every system independently and statically, as shown in the left part of figure 6. In this case the bandwidth is logically divided between the two systems, so voice calls and data traffic are managed independently. For example, it can be seen that the 3G data traffic has a limit in the BW even in the case where the 2G part does not occupy the entire physical resources.

According to the present invention such traffic management algorithms are unified with a common and single transmission, therefore having an optimal allocation of resources all the time, as can be seen on the right hand side of figure 6, where. the situation with the common pools is shown. In this case, the interface is fully dynamically shared, so the voice calls are carried with the maximum priority and data traffic uses the rest of the interface. If there is only 3G data traffic, it can occupy the complete physical interface leading to a gain in trunking efficiency. And no matter which system (2G or 3G) is the source of the traffic, as far the system is concerned, they are just voice and data, and prioritised as such, not according to their RAT origin.

Several queues are implemented in the common equipment to control the traffic flow. This is already done in the ATM or IP equipments: doing so implies no changes in this part of the equipments. From higher layers, the user plane traffic is marked with a quality of service, (AAL type with bandwidth required in ATM or DSCP priority marking in the IP packets), and then the most priority queue is used for conversational services (no matter if it is 2G or 3G), then the streaming calls, then Interactive and background with possibilities of having different priorities according to the provisioned priority of the HLR (which is already common in 2G-3G now). In the HLR, there are two parameters: ARP and THP which define the priority of the traffic, and they apply to GSM and UMTS, so the relative priority of the Interactive Background is defined by these two parameters, to prioritise in the transmission queues.

## Claims

1. Method for transmitting packets in a mobile telecommunications network, the mobile telecommunications network having an access network, comprising the following steps:
- identifying at least a first node (4, 5) and at least a second node (6, 7) of the access network, said at least first node being capable of connecting to the said at least second node and vice versa;
- transmitting at least one packet from the first node to the second node and/or vice versa;
**characterized in that**
- the step of transmitting packets uses a common physical transmission interface (10) with bandwidth dynamically allocated to either a first Radio Access Technology or a second Radio Access Technology according to one or more of their quality of service parameters, by a single common Call Admission Control (20) and a single common Congestion Control algorithm (30) for both Radio Access Technologies; and
- both packets of said first and second Radio Access Technologies are encapsulated using a common data link layer and a common network layer over a single common physical layer (106).

2. Method according to claim 1, wherein said first Radio Access Technology is GSM and said second Radio Access Technology is UMTS.

3. Method according to any of claims 1-2, wherein the step of transmitting said at least one packet uses ATM as a common protocol for both packets of a first and second Radio Access Technologies.

4. Method according to any of claims 1-2, wherein the step of transmitting said at least one packet uses IP as common protocol for both packets of a first and second Radio Access Technologies.

5. Method according to any of claims 2-3, wherein GSM signalling part is transported over ATM Adaptation Layer AAL2.

6. Method according to any of claims 1-3 and 5, wherein User Plane Data for Circuit Switch is transported over ATM Adaptation Layer AAL2.

7. Method according to any of claims 1-3 and 5-6, wherein GPRS protocols, user and control plane are mapped over ATM Adaptation Layer AAL5.

8. A computer program comprising computer program code means adapted to perform the method as claimed in any of claims 1-7, when said program is run on a computer.

9. A computer program as claimed in claim 8 embodied on a computer readable medium.

10. A carrier medium carrying the computer program of claim 8.

11. System for transmitting packets in a mobile telecommunications network, the mobile telecommunications network having an access network, the system comprising:
- at least a first node (4, 5) and at least a second node (6, 7) which are capable of connecting to each other and of transmitting at least one packet;
**characterized in that:**
- both said first node and said second node each comprise:
- a single interface board (20) with single common Call Admission Control means and single common Congestion Control means for dynamically allocating packets of a first Radio Access Technology and of a second Radio Access Technology according to their quality of service parameters; and
- encapsulating means for encapsulating both packets from a first and a second Radio Access Technologies using a common data link layer and a common network layer over a single common physical layer (106);
and **in that** the system comprises:
- a common physical transmission interface (10) whose bandwidth is dynamically allocated to either the first or the second Radio Access Technologies according to such one or more quality of service parameters.

12. System according to claim 11, wherein said first Radio Access Technology is GSM and said second Radio Access Technology is UMTS.

13. System according to claim 12, wherein signalling in GSM is transported over ATM Adaptation Layer AAL2.

14. System according to any of claims 11-13, wherein User Plane Data for Circuit Switch is transported over ATM Adaptation Layer AAL2.

15. System according to any of claims 11-14, wherein GPRS protocols, user and control plane are mapped over ATM Adaptation Layer AAL5.
